(19) Europäisches Patentamt
European Patent Office
Office européen des brevets

(11) **EP 4 362 360 A1**

(12) **EUROPEAN PATENT APPLICATION**

(43) Date of publication:
**01.05.2024 Bulletin 2024/18**

(21) Application number: **23204295.2**

(22) Date of filing: **18.10.2023**

(51) International Patent Classification (IPC):
**H04B 17/373** (2015.01)

(52) Cooperative Patent Classification (CPC):
**H04B 17/373**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2022 FI 20225959**

(71) Applicant: **Nokia Solutions and Networks Oy 02610 Espoo (FI)**

(72) Inventors:
• **ROSE, Luca**
  **Orsay (FR)**
• **ZIRWAS, Wolfgang**
  **Munich (DE)**
• **SHEHZAD, Muhammad Karam**
  **Massy (FR)**

(74) Representative: **Nokia EPO representatives Nokia Technologies Oy Karakaari 7 02610 Espoo (FI)**

(54) **CHANNEL STATE INFORMATION REPORTING**

(57) Apparatuses and methods in a communication system are disclosed. A channel predictor is determined (602) to be used in a connection between a base station and a terminal device. The predictor is trained (610) using channel state information of the connection and a predictor function determined to be used both in the base station and terminal device. The base station calculates (614) a predicted state of the channel utilising the predictor function and transmits (616) payload data to the terminal device. The base station receives (618) update information to the predicted state of the channel from the terminal device, where the update information is the variation between the channel predicted at the terminal device and the measured channel.

RECEIVE TERMINAL INFORMATION — 600

DETERMINE CHANNEL PREDICTOR — 602

DETERMINE TIME PERIOD — 604

TRANSMIT RS — 606

RECEIVE CSI — 608

DETERMINE PREDICTOR FUNCTION — 610

TRANSMIT PREDICTOR FUNCTION — 612

CALCULATE PREDICTED STATE — 614

TRANSMIT PAYLOAD DATA — 616

RECEIVE UPDATE INFORMATION — 618

FIG. 6

EP 4 362 360 A1

**Description**

**Field**

The exemplary and non-limiting embodiments of the invention relate generally to wireless communication systems. Embodiments of the invention relate especially to apparatuses and methods in wireless communication networks.

**Background**

Wireless telecommunication systems are under constant development. There is a constant need for higher data rates and high quality of service. Reliability requirements are constantly rising and ways and means to ensure reliable connections and data traffic while keeping transmission delays minimal are constantly under development.

Channel state information (CSI) measured by terminal devices and reported to network is used in communication systems to help to control downlink transmissions. To meet the requirements of users, many transmission schemes such as coding, adaptive modulation and channel-aware scheduling, for example, need accurate CSI at the transmitter side to achieve a significant gain in the downlink direction. Thus, obtaining accurate CSI is important.

**Summary**

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there are provided apparatuses of claims 1 and 7.

According to an aspect of the present invention, there are provided methods of claims 10 and 13.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

**List of drawings**

Embodiments of the present invention are described below, by way of example only, with reference to the accompanying drawings, in which

Figures 1 and 2 illustrate examples of simplified system architecture of a communication system;
Figure 3 illustrates an example scenario;
Figure 4 is a flowchart illustrating some embodiments;
Figure 5 is a signalling chart illustrating an embodiment,
Figures 6, 7, 8 and 9 are flowcharts illustrating some embodiments;
Figures 10A, 10B, 10C and 10D illustrate examples of performance of conventional approach and the proposed solution; and
Figures 11A and 11B illustrate simplified examples of apparatuses applying some embodiments of the invention.

**Description of some embodiments**

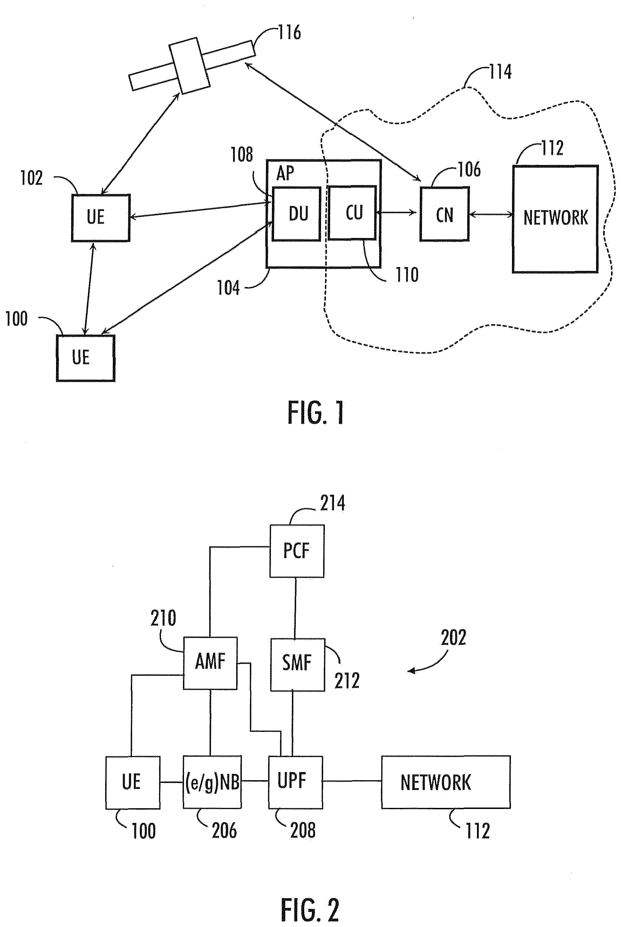

Fig. 1 shows devices 100 and 102. The devices 100 and 102 may, for example, be user devices or user terminals. The devices 100 and 102 are configured to be in a wireless connection on one or more communication channels with a node 104. The node 104 is further connected to a core network 106. In one example, the node 104 may be an access node, such as (e/g)NodeB, serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC).

The device (also called a subscriber unit, user device, user equipment (UE), user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device ( e.g. a portable or non-portable computing device) that includes wireless mobile communication devices operating with or without an universal subscriber identification module (USIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G or NR (New Radio) enables using multiple input - multiple output (MIMO) antennas, many more base stations or nodes than the Long Term Evolution, LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication 116 to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)NodeBs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 100 communicating via a 5G network 202 with a data network 112. The user terminal 100 is connected to a Radio Access Network RAN node, such as (e/g)NodeB 206 which provides the user terminal a connection to the network 112 via one or more User Plane Functions 208. The user terminal 100 is further connected to Core Access and Mobility Management Function, AMF 210, which is a control plane core connector for (radio) access network and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function 214 which is configured to govern network behavior by providing policy rules to control plane functions.

As mentioned, channel state information (CSI) is used in modern wireless communication systems. CSI acquisition is important for example for multiple-input multiple-output (MIMO) precoding. Currently in fifth generation (5G) systems, two different methods are considered for CSI report: type I CSI and type II CSI feedback.

In CSI, the channel between the network node and terminal device is estimated starting from pilots transmitted by the network node such as a (e/g)NodeB. The pilot signals or symbols may periodic, semi-persistent or aperiodic. In 5G, both methods include a strong compression of the CSI estimated at the terminal device side in order to reduce the over-the-air (OTA) overhead. The compression used at the CSI feedback from a terminal device to the network node impact the precision of the CSI and consequently the performance of the precoding.

It has been noted that CSI possesses a certain level of time-consistency. Thus, CSI at a given time instant n is somehow correlated with the CSI at a given time instant $n$-1, $n$-2... This is particularly true for non-mobile terminal devices and for terminal devices whose mobility pattern can be predicted. Examples of the latter include a device on a train or traveling on a freeway.

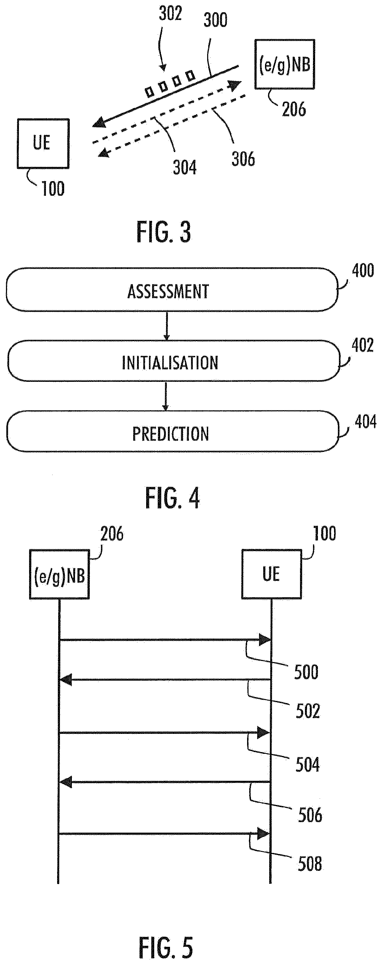

Fig. 3 illustrates an example scenario, where (e/g)NodeB 206 is transmitting a signal 300 comprising pilot symbols or reference signal 302 to the terminal device 100. The terminal device is configured to determine CSI of the received signal and transmit the determined CSI 304 in a compressed form to the (e/g)NodeB prior to data scheduling. What is the form of the reference signal or the pilot symbols and how CSI is determined, is not relevant regarding the embodiments of the invention.

For each terminal device in the cell, the (e/g)NodeB may be configured to store a given amount of previous CSI estimations. In an embodiment, this data, which available at both ends, may be used both by the (e/g)NodeB and terminal device to predict future CSI values. A channel predictor function (PF) may be applied at both the (e/g)NodeB and terminal device. The predictor function PF will receive same inputs at both sides and predict the next channel states. In an embodiment, the output of the predictor function may be used at the (e/g)NodeB for controlling data transmission to the terminal device. The terminal device may transmit an updated channel information as feedback with respect to the prediction. In an embodiment, the feedback may take fewer OTA resources than signalling the whole CSI. In an embodiment, the feedback may be sent with less severe compression than signalling the whole CSI and thus improve CSI performance.

In an embodiment a neural network (NN), in particular a recurrent neural network (RNN) can be used to implement the channel predictor CP. The (e/g)NodeB may implement the channel predictor to compute the predictor function PF, which will then be fed back to the UE. For each UE in the cell, the (e/g)NodeB may be configured to store a certain amount of previous CSI estimations. This data will be used by the (e/g)NodeB to train the RNN and compute the PF.

For simplicity, we will describe the invention for a single BS-UE link, remarking that this process should be repeated for all the UEs supporting the predictor function. For simplicity, we will describe the invention for a single (e/g)NodeB terminal device link, while keeping in mind that the proposed solution may be repeated for all the terminal devices supporting the proposed predicting procedure.

In following, $S_n^{BS} = \left\{\widehat{H}_k^{BS}\right\}_{k=n-N}^{n-1}$ denotes the set N past of estimated CSI available at the (e/g)NodeB (BS), and $S_n^{UE}$ denotes the set of estimated channel CSI available at the terminal device (UE), where $n$ is the time instant.

$k$ is an index. The predicted channels at instant n at the (e/g)NodeB and the terminal device are indicated by $\widetilde{H}_n^{BS}$ and $\widetilde{H}_n^{UE}$ respectively, while the actual channel realization is indicated by $H_n$. The feedback 306 from the terminal device to the (e/g)NodeB is denoted by $Feed_n$.

The flowchart of Fig. 4 illustrates an embodiment. The flowchart illustrates an example of an embodiment applied at the (e/g)NodeB and terminal device. In an embodiment, the procedure may be divided into three phases, assessment 400, initialisation 402 and prediction 404.

In an embodiment, the channel predictor function PF is determined at the (e/g)NodeB side and then signalled to the terminal device. In an embodiment, the channel predictor function PF is determined at the terminal device side and then signalled to the (e/g)NodeB. In following, the alternative where determination is made at the (e/g)NodeB is discussed first.

In assessment phase 400, the (e/g)NodeB and the terminal device may exchange messages in order to assess the capabilities of the terminal device and agree on a channel predictor CP to be used, establish the amount of past CSI estimation and the length of the time period of initialization phase. In an embodiment, the time period is based on at least partly on the determined channel predictor. The capabilities of the terminal device may comprise the processing capability of the terminal and available memory (for storing CSI values), for example.

Fig. 5 illustrates an example of signalling between the (e/g)NodeB 206 and the terminal device 100 in the assessment phase 400.

The (e/g)NodeB transmits a message 500 to the terminal device regarding capabilities of the terminal device. In an embodiment, the message queries machine learning/artificial intelligence capabilities of the terminal device and what kind of predictor representation is supported by the terminal device. Examples of possible predictor representations are full function reporting, function index, model-based representation, model-based representation index and including in the CSI reference symbols. These will be explained below.

The terminal device responds with message 502. In case the terminal device supports some predictor representations, the terminal device may transmits to the (e/g)NodeB a list of available representations.

In an embodiment, both the entities may agree (using the 500 and 502 message exchange) on the length of past data, which will be used for making the prediction. Thereby, this past estimated data will be used by the predictors at both ends to predict the next channel realization.

The (e/g)NodeB queries 504 the terminal device about the capability to execute prediction algorithms and CSI memory available in the terminal device. The terminal device is configured to respond 506 with the requester information.

The (e/g)NodeB is configured to, at least partly based on responses from the terminal device, determine the length of the initialisation phase, where CSI measurements are collected and transmit 508 information on the determination to the terminal device. In an embodiment, the length of the initialisation phase may depend on channel predictor.

Returning to Fig.4, initialisation phase 402, follows the assessment phase. In the initialisation phase 402 the (e/g)NodeB and the terminal device gather CSI data need for training the channel predictor CP to obtain a channel predictor function PF or algorithm to operate reliably.

In an embodiment, in the initialisation phase the acquisition of CSI data (e/g)NodeB and terminal device operate according to known methods. The (e/g)NodeB may be configured to transmit pilot symbols or reference symbols to the terminal device which may determine CSI based on the received pilot symbols or reference symbols. In an embodiment, the length of the initialisation phase is determined by the (e/g)NodeB. The terminal device may transmit information on the CSI to the (e/g)NodeB in a compressed form.

The terminal device obtains channel estimates $\widehat{H}_n^{UE}$ and transmits information on the estimates to the (e/g)NodeB:

$$\widehat{H}_n^{BS} = F_C(\widehat{H}_n^{UE})$$

where $F_C(\cdot)$ is a function that includes quantization and reduces the overhead of the feedback information. For example, $F_C(\cdot)$ can be a standard element-wise quantization scheme or the Type-I and Type-II CSI report used in 3gpp.

During this phase, the set of estimated CSI available at the (e/g)NodeB $S_n^{BS} = \left\{\widehat{H}_k^{BS}\right\}_{n-N-1}^{n-1} = \left\{F_C(\widehat{H}_k^{UE})\right\}_{n-N-1}^{n-1}$, and it equals the set of estimated CSI available at the terminal device: $S_n^{UE} = S_n^{BS}$.

As mentioned, in an embodiment a neural network, in particular an RNN can be used to implement the channel predictor. The (e/g)NodeB may implement the channel predictor to compute the predictor function, which will then be fed back to the UE. Even after the predictor function is determined, the RNN at the (e/g)NodeB can keep running in the background, using the new estimated channel as an input. The RNN may keep updating the corresponding predictor function (or matrices) and may trigger an update in the prediction method, whenever a threshold is surpassed. This allows to track very well sudden changes of model (e.g., if the underlaying channel evolution changes, for example because a UE passed behind a building).

In an embodiment, the design of a new predictor and estimator using AI will not only reduce the channel MSE but also the OTA overhead. This will ultimately improve the performance of MIMO precoding. Hence, a cellular user can experience better quality-of-service (QoS) and higher data rate at a very low latency. Further, proposed solution can play a vital role in the industrial applications- factory automation, and vehicular communication, for example. These kinds of applications demand accurate CSI, which can be efficiently provided at a very low overhead cost.

In an embodiment, during the initialization phase, past channel realizations are stored and used to train the RNN. The RNN is used to predict next channels and the predictions is tested against the estimated value. Once the distance between the estimated value and the predicted value is below a certain threshold, the RNN is considered ready and is adopted as predictor function PF.

In an embodiment the distance may be formulated as follows

$$Error = \frac{1}{M} \sum_{n=1}^{M} \left\| \widetilde{H}_n^{BS} - \widehat{H}_n^{BS} \right\|_{FRO}^2$$

where $\| \cdot \|_{FRO}$ indicates the Frobenius norm, and M is a design parameter.

Other possibilities involve a given number of pre-determined predictor functions stored in the devices (and at the (e/g)NodeB), which may be enumerated in advance. During the set-up phase, a suitable predictor function may be selected and adopted.

An RNN is one of the techniques of Machine Learning (ML) to make the prediction of a data, which is correlated in time. The quantized version of the estimated channel, available at the (e/g)NodeB, is used to train and test the RNN.

For the training purpose, a series of J consecutive blocks are passed as an input to the RNN and their corresponding labels to the output of the RNN. At time iteration n, RNN takes the quantized version of the channel as well as its d-step delayed versions, and output is predicted and the error between the predicted output and the actual label is backpropagated to update the weights (using adaptive moment estimation, for example) of the RNN. This process is repeated until a certain convergence condition, e.g., accuracy of the predicted channel, etc., is met. Once the training is completed, RNN is used to make predictions.

Based on the predicted channel using RNN, a prediction function can thus be computed and fed back to the terminal device, where the terminal device makes the prediction with the help of reported information by the (e/g)NodeB.

In this implementation, a single matrix $\hat{F}_1^{UE}$ is evaluated at the (e/g)NodeB . This is done using the following procedure.

1) Collect a set of predicted channels, and stack them into a matrix

$$\tilde{P} = [\tilde{H}_L^{BS}, \ldots, \tilde{H}_1^{BS}]$$

2) Collect the corresponding set of estimated channels:

$$\hat{P} = [\hat{H}_{L-1}^{BS}, \ldots, \hat{H}_0^{BS}]$$

3) Since $\tilde{P} = F_1 \hat{P}$ it results that:

$$\hat{F}_1 = \tilde{P} \, pinv(\hat{P})$$

Where $pinv(\cdot)$ represents the right pseudo inverse. The matrix $\hat{F}_1$ is fed back at the UE, and will be used henceforth to predict the channel at both the (e/g)NodeB and the terminal device, using the following method:

$$\tilde{H}_n^{BS} = \hat{F}_1 \hat{H}_{n-1}^{BS}$$

$$\tilde{H}_n^{UE} = \hat{F}_1 \hat{H}_{n-1}^{BS}$$

In an embodiment, at the end of this phase, the neural network NN, for example RNN, will report if it is able to predict the channel with a determined channel predictor function PF and indicate the PF to the terminal device using one of the following outputs:

1) Full function reporting
2) Function index
3) Model-based representation
4) Model-based representation index.
5) Precoded CSI RS including the effect of the predictor function

In an embodiment, this phase terminates when one of the following conditions is met:

1) The NN predictions are sufficiently close to the feedback of the UE (where sufficiently close means that the norm of the difference is below a certain threshold).
2) The maximum amount of iteration is met.

The threshold in 1) can be dependent on the target signal-to-interference plus noise ratio (SINR), or other network conditions. A negative response is also possible, that is after the maximum number of iterations, the NN is not able to predict the channel with sufficient precision.
The obtained PF is thus signalled to the terminal device using one of the outputs mentioned above. Then the same PF is used both at the terminal device and at the (e/g)NodeB

When the full function reporting is selected, the predictor function is converted to an equation. This is simply done by writing the input-output relationship, considering weights and activation functions. The methods to convert NNs into equations are known in the literature and reported here for completeness. This is, however, a discouraged method, as the function itself can be too complex to be implemented and feedback.

$$Y = g\,(WX + b)$$

where **W** and **b** represents the weights of a NN, **X** and **Y** depict the inputs (in terms of machine learning (ML), input features of a NN) and outputs of a NN. Also, $g\,(\cdot)$ represent the activation function, which can be rectified linear unit (ReLu), hyperbolic tangent *(tanh),* sigmoid, etc.

When the function index is selected, a certain number of functions is reported into a table, which will be set at standard level (preferred) or agreed upon during the assessment phase. The NN is converted into an equation, then the function in the set that is the closest (i.e., that gives the predictions that are the closest) to the NN is selected. Such solution has, however, the problem of finding an optimal set of functions.

In model-based representation, a certain number of matrix-based models for channel evolution are evaluated through the NN, and the matrix composition is returned. For example, an auto regressive model of order *K* can be adopted:

$$\widetilde{H}_n^{BS} = \sum_{k=m}^{M} \widehat{F}_k^{UE}\, \widehat{H}_{n-k}^{BS}$$

The output of the predictor block is to provide the set of matrices $\left\{\widehat{F}_k^{UE}\right\}$. In the simplest way, only one matrix could be reported.

The reporting of the matrix (or set of matrices) can be done by using a codebook and henceforth reporting only the index. Alternatively, the (e/g)NodeB may compress the matrix and therefore report $f\!\left\{\widehat{F}_k^{UE}\right\}$, where f could be, for example, a maximum eigen vector compression.

In an embodiment, a predictor matrices codebook may be established through standards. The (e/g)NodeB may feedback the matrices (or their combination) that better approximates the set of matrices $\left\{\widehat{F}_k^{UE}\right\}$.

In precoded CSI RS including the predictor function the (e/g)NodeB does not explicitly report any predictor model information but applies the predictor function on the CSI RSs. The terminal device may then calculate the difference signal between the estimated evolved radio channel based on these CSI RSs with its latest CSI report $\widetilde{H}_{n-1}^{UE}$. In case the (e/g)NodeB predictor models has been correct then the difference between the previous $\widetilde{H}_{n-1}^{UE}$ and the current estimated $\widetilde{H}_n^{UE}$ will be zero under the assumption that $\widetilde{H}_n^{UE}$ has been estimated from the precoded CSI RS $\widehat{F}_k^{UE} \times CSI$. Otherwise, the terminal device can estimate the prediction error similar as in the previously described methods.

The benefit of such an inherent application of the predictor model to the (e/g)NodeB terminal device feedback is that it avoids any extra overhead for transmission of the precoder model to the terminal device. Such precoder overhead might get large in case of a large RF bandwidth with many physical resource blocks (PRBs) or subbands and in case of regular model updates for fast moving UEs.

The precoded CSI RSs may be especially beneficial in case of sufficiently large correlation between two consecutive CSI reports so that at least the relative power of the CSI RSs remains close to one.

In an embodiment, the (e/g)NodeB may use a RNN to train the predictor function periodically or on demand. The RNN at the (e/g)NodeB may keep running in the background. The channel estimates obtained during the prediction phase may be used as an input to the RNN which may keep updating the corresponding predictor function (or matrices) and trigger an update in the prediction method, whenever a given threshold is surpassed.

This allows, for example, to track sudden changes in the propagation environment, for example because a terminal device has passed behind a building.

When the initiation phase 402 has been performed and thus the CSI data gathered both at the (e/g)NodeB and terminal device, the prediction phase 404 may start.

In an embodiment, during this phase, the same channel predictor function PF or algorithm may be applied at the (e/g)NodeB and the terminal device to predict the channel based on the same set of past channels as indicated in the gathered CSI data. As equations:

$$\tilde{H}_n^{UE} = Pc\left(S_n^{UE}\right)$$

$$\tilde{H}_n^{BS} = Pc\left(S_n^{BS}\right)$$

where $\tilde{H}_n^{UE}$ is the predicted channels at instant n at the terminal device, $\tilde{H}_n^{BS}$ the predicted channels at instant n at the (e/g)NodeB and *Pc (.)* is the channel predictor function. It may be noted that since the channel predictor is common to terminal device and the (e/g)NodeB, and $S_n^{UE} = S_n^{BS}$ it will result that $\tilde{H}_n^{BS} = \tilde{H}_n^{UE}$.

At this stage, the (e/g)NodeB transmits CSI reference data or pilot symbols (CSI-RS) to acquire the channel. Consequently, the terminal device estimates the channel by exploiting CSI-RS. However, it is expected that there is a certain difference between the predicted channel and the estimated channel at the terminal device. It may be that there is a certain difference between the predicted channel and the estimated channel. In an embodiment, the terminal device may be configured to determine an update as:

$$U_n = F_U(\hat{H}_n^{UE}, \tilde{H}_n^{UE})$$

where the function $F_U(\cdot)$ (the update function) is a measure of the distance between the two matrices. In an embodiment, as a simple implementation, the update function is a difference, and thus $U_n = \tilde{H}_n^{UE} - \hat{H}_n^{UE}$.

Once an update is computed, it may be quantized through a quantization function $F_Q(\cdot)$ and transmitted back to the (e/g)NodeB as

$$Feed_n = F_Q(U_n)$$

A simple implementation of the function $F_Q(\cdot)$ is a quantization function.

The update indicates to the (e/g)NodeB the variation between the predicted channel and the actually measured (estimated) channel. In an embodiment, the (e/g)NodeB is configure estimate the channel as:

$$\hat{H}_n^{BS} = \tilde{H}_n^{BS} + F_U^{-1}(Feed_n)$$

where $F_U^{-1}$ represents an appropriate inverse of the function $F_U$. If the update function is a simple difference, the inverse will be $F_U^{-1} = -F_U$ and

$$\hat{H}_n^{BS} = \tilde{H}_n^{BS} - F_Q\left(\tilde{H}_n^{UE} - \hat{H}_n^{UE}\right).$$

During this phase the set of estimated CSI available at the (e/g)NodeB

$$S_n^{BS} = \left\{\hat{H}_k^{BS}\right\}_{n-N-1}^{n-1},$$

and the set of estimated CSI available at the terminal device

$$S_n^{UE} = \left\{\widehat{H}_k^{UE}\right\}_{n-N-1}^{n-1} = \left\{\widetilde{H}_n^{UE} + F_U^{-1}(Feed)\right\}_{n-N-1}^{n-1}$$

and the equivalence $S_n^{BS} = S_n^{UE}$ still holds.

In the method described above it is possible either to reduce the amount of bit necessary for the feedback for similar performance (i.e. utilising less bits for Feed than would be used for $F_C(\widehat{H}_k^{UE})$ ), or to increase the CSI performance with the same amount of bits.

In an embodiment, if the prediction at the terminal device succeeded and the prediction output equals the estimated channel ( $\widetilde{H}_n^{UE} = \widehat{H}_n^{UE}$ ), then no feedback would be necessary, bringing the amount of necessary bit to 0.

In an embodiment, if infinite number of bits are considered for the feedback, it is possible to define $F_Q(x) = F_C(x) = x$. This would imply that $\widehat{H}_n^{BS} = \widehat{H}_n^{UE}$ , that is the proposed invention would have no advantages. In other words, the largest amount of gain is acquired with low resolutions feedbacks. This is particularly relevant as 3GPP CSI acquisition schemes consider low amount of bit to reduce feedback overhead.

In an embodiment, different channel predictor functions or algorithms can be tabled and stored. Possible storing elements include function or algorithm, memory, message exchanges.

The transmission bandwidth for high data rate terminal devices might cover multiple physical resource blocks, PRBs, or multiple subbands. In that case the precoder model has to be reported from (e/g)NodeB to the terminal device for each PRB/subband and the related reporting overhead may get large on the PDCCH. Generally, terminal devices might be scheduled per transmission time interval, TTI, on different PRBs/subbands, In addition, channel variations might vary significantly depending on PRB/subband. For that reason, a fast and flexible adaptation of the PRBs/subbands for which a predictor model is being reported is beneficial. A simple solution can be then a two-step approach and to include a bitmap for, for example, 13 subbands, which will define per TTI those subbands (bitmap value equal to '1') for which a new predictor model will be reported in this time slot. That way it is possible to limit the downlink overhead to the relevant PRBs/subbands.

It may be noted that in case the allocation does not change it is possible to define a further bit with the meaning 'keep the previous bitmap'.

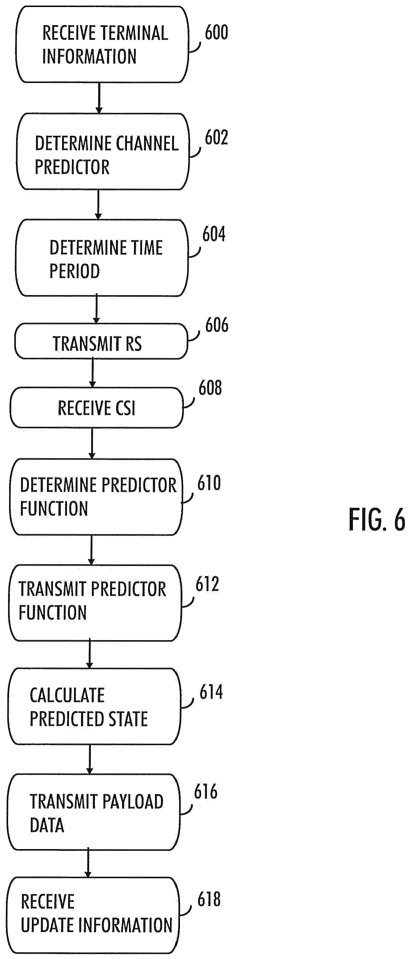

The flowchart of Fig. 6 illustrates an embodiment. The flowchart illustrates an example of the operation of an apparatus. In an embodiment, the apparatus may be a network node or (e/g)NodeB, a part of a network node or (e/g)NodeB or any other apparatus capable of executing following steps.

The flowchart illustrates the operation of the apparatus in both initialisation 402 and prediction 404 phases.

In step 600, the apparatus is configured to receive from the terminal device capabilities of the terminal device

In step 602, the apparatus is configured to determine a channel predictor to be used at least partly based on the capabilities of the terminal device.

In step 604, the apparatus is configured to determine and transmit to the terminal device length of a given time period for collecting channel state information, based on at least partly on the determined channel predictor;

In step 606, the apparatus is configured to transmit reference information to the terminal device for the duration of the given time period;

In step 608, the apparatus is configured to receive, as a response to the reference information transmission, channel state information from the terminal device;

In step 610, the apparatus is configured to determine, by training the channel predictor, a channel predictor function to be used in the communication between the apparatus and the terminal device at least partly based on the capabilities of the terminal device and the received channel state information;

In step 612, the apparatus is configured to transmit information on the channel predictor function to the terminal device;

In step 614, the apparatus is configured to calculate () a predicted state of the channel utilising the channel predictor function known by the terminal device;

In step 616, the apparatus is configured to transmit payload data to the terminal device, the data transmission comprising reference information;

In step 618, the apparatus is configured to receive update information to the predicted state of the channel from the terminal device, where the update information is the variation between the channel predicted at the terminal device and the measured channel.

In an embodiment, the apparatus is configured to update the predicted state of the channel based on the update information received from the terminal device.

In an embodiment, the apparatus is configured to determine the predicted state of channel is correct if no updates are received from the terminal device.

In an embodiment, the apparatus is configured to utilise information on the predicted state of the channel when transmitting data to the terminal device.

In an embodiment, the apparatus is configured to calculate the predicted state of channel utilising a Kalman filter.

In an embodiment, the apparatus is configured to calculate the predicted state of channel utilising a recurrent neural network.

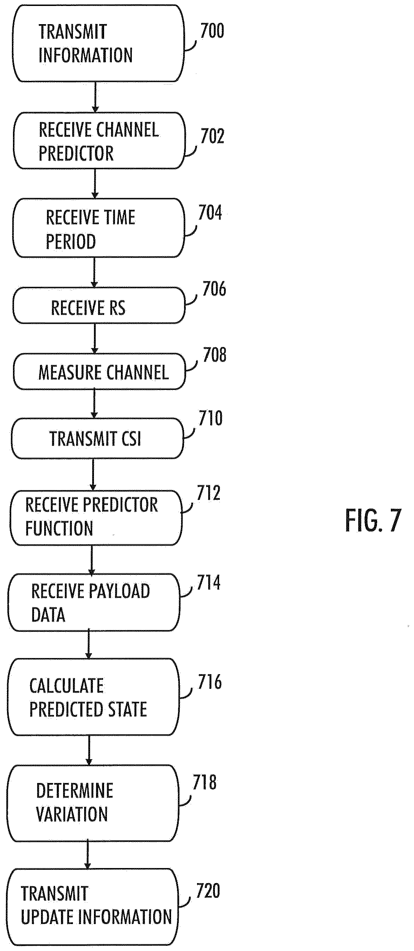

The flowchart of Fig. 7 illustrates an embodiment. The flowchart illustrates an example of the operation of an apparatus. In an embodiment, the apparatus may be a terminal device or user equipment, a part of a terminal device or user equipment or any other apparatus capable of executing following steps.

The flowchart illustrates the operation of the apparatus in both initialisation 402 and prediction 404 phases.

In step 700, the apparatus is configured to transmit to a network element the capabilities of the apparatus.

In step 702, the apparatus is configured to receive from the network element a channel predictor to be used, the predictor being at least partly based on the capabilities of the terminal device.

In step 704, the apparatus is configured to receive from the network element the length of a given time period for collecting channel state information, the time period being based on at least partly on the determined channel predictor

In step 706, the apparatus is configured to receive reference data from the network node.

In step 708, the apparatus is configured to measure the state of the channel between the apparatus and the network node based on the reference data.

In step 710, the apparatus is configured to transmit, for a given time period, channel state information to the network node.

In step 712, the apparatus is configured to receive from the network node information on channel predictor function.

In step 714, the apparatus is configured to receive from the network node payload data, the data transmission comprising reference information.

In step 716, the apparatus is configured to calculate a predicted state of the channel utilising the channel predictor function known by the network node.

In step 718, the apparatus is configured to determine variation between the predicted state of channel and the measured state of channel.

In step 720, the apparatus is configured to transmit information on the variation to the network node as update information.

In an embodiment, if the variation between the predicted state of channel and the measured state of channel is smaller than a given threshold, the apparatus is configured to cease transmitting information on the difference to the network node.

In an embodiment, if the difference between the predicted state of channel and the measured state of channel is smaller than a given threshold, the apparatus is configured to transmit information on the difference to the network node.

Above, the channel predictor function has been determined at the (e/g)NodeB. However, the calculation for determining can be done also in the terminal device. The terminal device may estimate the CSI using the classic approach for a given number of time steps, and uses such highly refined information to compute a channel predictor function PF. This can be done in a similar manner as in the above-described case in (e/g)NodeB with the either training a NN, or selecting an available function from a list, for example.

The UE will then feedback the PF to the (e/g)NodeB, where it will be used to predict the channel.

In an embodiment, the UE or the (e/g)NodeB may initiate the reinitialization of the predictor function, if the variation between the predicted state of channel and the measured state of channel is larger than a given threshold, for a given amount of instances.

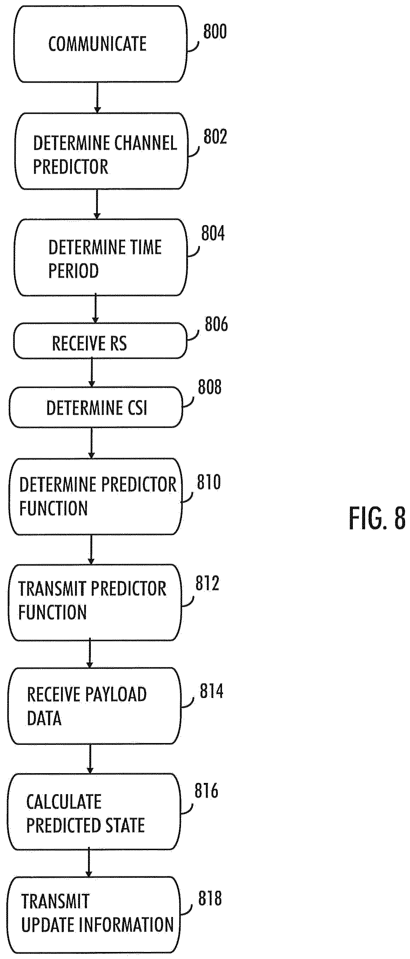

The flowchart of Fig. 8 illustrates an embodiment. The flowchart illustrates an example of the operation of an apparatus. In an embodiment, the apparatus may be a terminal device or user equipment, a part of a terminal device or user equipment or any other apparatus capable of executing following steps.

The flowchart illustrates the operation of the apparatus in both initialisation 402 and prediction 404 phases.

In step 800, the apparatus is configured to communicate with a network element over a communication link regarding capabilities of the apparatus and the network element.

In step 802, the apparatus is configured to determine a channel predictor to be used at least partly based on the capabilities of the apparatus and network element.

In step 804, the apparatus is configured to determine and transmit to the network element length of a given time period for collecting channel state information, based on at least partly on the determined channel predictor.

In step 806, the apparatus is configured to receive from the network element reference information for the duration of the given time period.

In step 808, the apparatus is configured to determine, as a response to the reference information, channel state information.

In step 810, the apparatus is configured to determine, by training the channel predictor, a channel predictor function to be used in the communication between the apparatus and the network element at least partly based on the capabilities of the apparatus and network element and the determined channel state information.

In step 812, the apparatus is configured to transmit information on the channel predictor function to the network element.

In step 814, the apparatus is configured to receive payload data from the network element, the data exchange comprising reference information;

In step 816, the apparatus is configured to calculate a predicted state of the channel utilising the channel predictor function.

In step 818, the apparatus is configured to transmit to the network element update information to the predicted state of the channel, where the update information is the variation between the channel predicted at the apparatus and the measured channel.

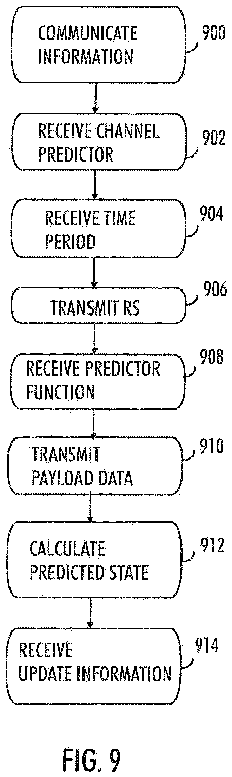

The flowchart of Fig. 9 illustrates an embodiment. The flowchart illustrates an example of the operation of an apparatus. In an embodiment, the apparatus may be a network node or (e/g)NodeB, a part of a network node or (e/g)NodeB or any other apparatus capable of executing following steps.

The flowchart illustrates the operation of the apparatus in both initialisation 402 and prediction 404 phases.

In step 900, the apparatus is configured to communicate with a terminal device over a communication link regarding capabilities of the apparatus and the terminal device.

In step 902, the apparatus is configured to receive a channel predictor to be used at least partly based on the capabilities of the apparatus and network element.

In step 904, the apparatus is configured to receive from the terminal device the length of a given time period for collecting channel state information, the length being based on at least partly on the determined channel predictor.

In step 906, the apparatus is configured to transmit reference information to the terminal device for the duration of the given time period.

In step 908, the apparatus is configured to receive from the terminal device information on a channel predictor function.

In step 910, the apparatus is configured to transmit payload data to the terminal device, the data exchange comprising reference information;

In step 912, the apparatus is configured to calculate a predicted state of the channel utilising the channel predictor function.

In step 914, the apparatus is configured to receive from the terminal device update information to the predicted state of the channel, where the update information is the variation between the channel predicted at the terminal device and the measured channel.

To assess the performance of the proposed solution, two evaluation parameters, i.e., mean-squared-error (MSE) and received SNR, may be calculated by using the actual channel, $H_n$, and the estimated channel, $\widehat{H}_n^{BS}$, at the (e/g)NodeB.

The MSE may be calculated as follows:

$$MSE = \frac{1}{N} \sum_{n=1}^{N} \left\| \left| H_n - \widehat{H}_n^{BS} \right| \right\|_{FRO}^2$$

where $\| \cdot \|_{FRO}$ indicates Frobenius norm.

The MSE measures the distance between the actual channel and the estimated channel. A perfect estimator would have a MSE equal to 0. To observe the error due to induced by the quantizer, it can be assumed that estimation error is zero; thus, using a NN or a KF-based channel estimator do not make any difference.

The proposed approach brings the benefit of reducing OTA overhead by eliminating feedback if the difference is very small. Alternatively, quantization error can be reduced by keeping OTA occupation constant. Further, proposed approach can be beneficial in, for instance, when the terminal device is immobile. Therefore, in such a scenario, the difference is going to be negligible; Thus, feedback can be eliminated. Such an elimination of feedback can reduce the OTA overhead.

In order to assess the gains in terms of communication parameters, the estimated channel $\hat{H}_n^{BS}$ is used to compute a simple matched filter precoder, and the received SNR is measured in a single user MIMO case.

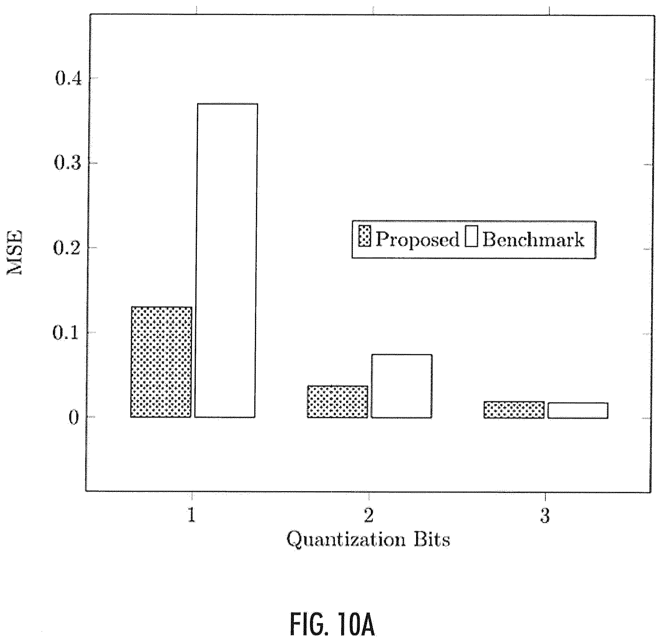

Fig. 10A illustrates the performance of MSE under the benchmark and the proposed approach, when the quantization bits (B) are varied. The figure reveals that increasing the quantization bits results in reducing the MSE, in both the approaches, i.e., benchmark and proposed. All the same, proposed approach outperforms the benchmark approach. For instance, using one quantization bit, proposed approach reduces the MSE to 0.13, whereas benchmark scheme has approximately MSE of 0.37. However, increasing the quantization bits results in reducing the MSE of benchmark approach, which shows that benchmark approach demands more overhead for the precise recovery of CSI.

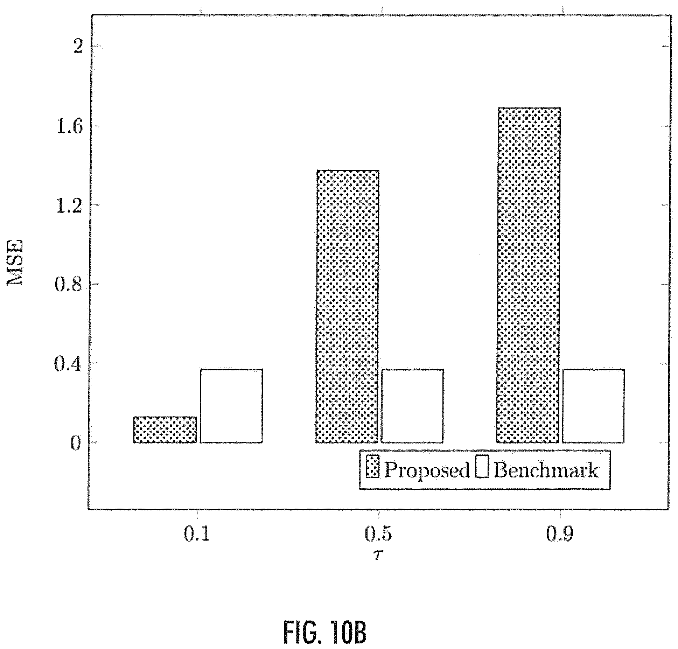

Fig. 10B illustrates the behaviour of MSE for different values of $\tau$, where $\tau$ is a parameter that measures one step correlation between two consecutive channel realizations. In other words, $\tau$ measures how much the channel is predictable, i.e., $\tau=0$ indicates a channel that is perfectly predictable and $\tau=1$ a channel for which each realization is independent from the previous. The figure shows that the MSE increases in the proposed approach with the increase of $\tau$. This is due to the reason of bad prediction in low signal-to-noise ratio (SNR) regime, which results in adding more noise on the predictor at BS; thus, noise is influenced on the UE as well. Conversely, the MSE of the conventional approach is constant. In summary, the performance of the proposed approach is better when channel is highly predictable.

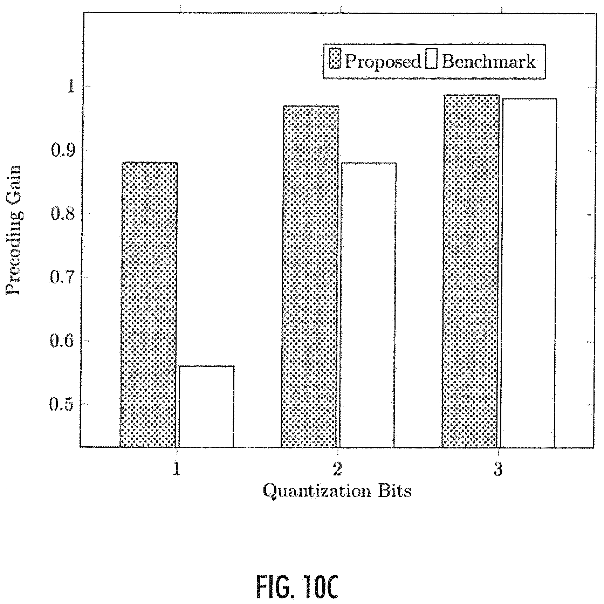

Fig. 10C illustrates a comparison between the precoding gain and the quantization bits with $\tau$ equals 0.1. The proposed approach gives higher precoding gain when channel is highly compressed. Also, there is approximately no improvement in the precoding gain of proposed approach when B= {2,3}, which is due to the reason that there is no change in the CSI (it can be observed from Fig. 10A that MSE is approximately zero B= {2,3}). Nonetheless, increasing the quantization bits results in increasing the precoding gain in the benchmark approach, which validates that benchmark approach is overhead-hungry. In short, for one quantization bit, proposed approach gives precoding gain of approximately 0.88, whereas benchmark has nearly 0.56. Thus, the proposed approach results in saving the quantization bits for providing the same gain, which benchmark achieves at B=3.

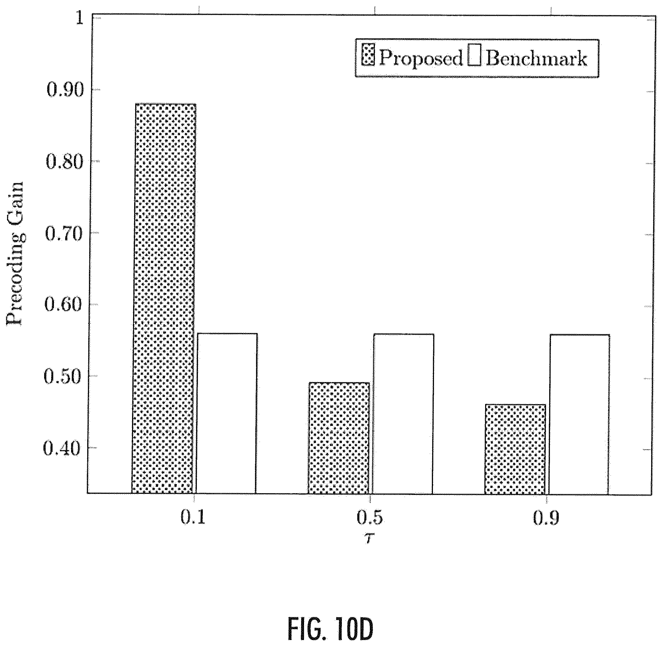

Fig. 10D illustrates the performance of precoding gain for various values of $\tau$. It can be depicted that the strength of precoding gain decreases when the $\tau$ increases, in the proposed approach. This is due to bad prediction. For instance, having $\tau = 0.9$ (in other words, channel is nearly unpredictable), proposed and benchmark approach provide precoding gain of almost 0.46 and 0.55, respectively. However, when the channel is predictable, i.e., $\tau=0.1$ then proposed approach high precoding gain.

In summary, the proposed solution results in not only saving the quantization bits but also reducing the MSE and increasing the precoding gain, which means that the OTA overhead can be reduced, and better quality of service (QoS) can be provided at the terminal device side. Thus, the proposed solution can be a viable solution for potential 5G and beyond applications. In addition, in an embodiment, this gain is achieved when ML is not used at the terminal device. In a nutshell, the proposed solution confirms that removing ML from the terminal device can still provide better CSI acquisition by utilizing lower amount of feedback bits. Conversely, if implementation of NN is considered at the terminal device end, then (e/g)NodeB does not require a NN for training a NN.

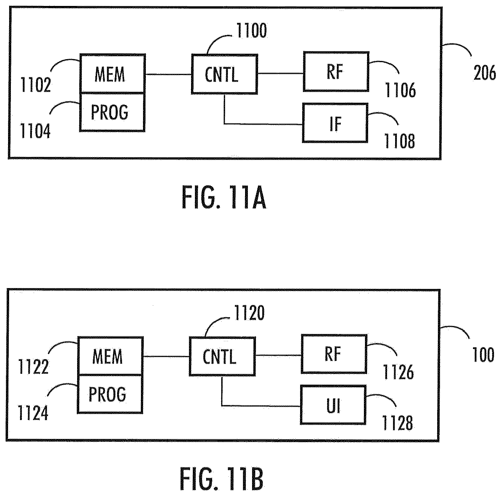

Figs. 11A and 11B illustrate embodiments. The figures illustrate a simplified example of an apparatus applying embodiments of the invention. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

Fig. 11A illustrates an example of an apparatus which may be a base station, (e/g)NodeB 206 or a part of base station or (e/g)NodeB.

The apparatus 206 of the example includes a control circuitry 1100 configured to control at least part of the operation of the apparatus.

The apparatus may comprise a memory 1102 for storing data. Furthermore, the memory may store software 1104 executable by the control circuitry 000. The memory may be integrated in the control circuitry.

The apparatus may comprise one or more interface circuitries 1106, 1108. The interface circuitries are operationally connected to the control circuitry 1100. An interface circuitry 1106 may be a set of transceivers configured to communicate wirelessly with terminal devices or user equipment of a wireless communication network. The interface circuitry may be connected to an antenna arrangement (not shown). The apparatus may also comprise a connection to a transmitter instead of a transceiver. The apparatus may further comprise an interface 1108 configured to communicate with other network elements such a core network or other corresponding apparatuses, for example a user interface.

In an embodiment, the software 1104 may comprise a computer program comprising program code means adapted to cause the control circuitry 1100 of the apparatus to realise at least some of the embodiments described above.

Fig. 11B illustrates an example of an apparatus which may be user equipment or terminal device 100 or a part of user equipment or a terminal device.

The apparatus 100 of the example includes a control circuitry 1120 configured to control at least part of the operation of the apparatus.

The apparatus may comprise a memory 1122 for storing data. Furthermore, the memory may store software 1124 executable by the control circuitry 1120. The memory may be integrated in the control circuitry.

The apparatus may comprise one or more interface circuitries 1126, 1128. The interface circuitries are operationally connected to the control circuitry 1120. An interface circuitry 1126 may be a set of transceivers configured to communicate with a RAN node such as an (e/g)NodeB of a wireless communication network. The interface circuitry may be connected to an antenna arrangement (not shown). The apparatus may also comprise a connection to a transmitter instead of a transceiver. The apparatus may further comprise a user interface 1128.

In an embodiment, the software 1124 may comprise a computer program comprising program code means adapted to cause the control circuitry 1120 of the apparatus to realise at least some of the embodiments described above.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, an apparatus in a communication system comprises means for realising the embodiments described above.

In an embodiment, an apparatus in a communication system comprises means for receiving from the terminal device capabilities of the terminal device; means for determining a channel predictor to be used at least partly based on the capabilities of the terminal device; means for determining and transmitting to the terminal device length of a given time period for collecting channel state information, based on at least partly on the determined channel predictor; means for transmitting reference information to the terminal device for the duration of the given time period; means for receiving, as a response to the reference information transmission, channel state information from the terminal device; means for determining, by training the channel predictor, a channel predictor function to be used in the communication between the apparatus and the terminal device at least partly based on the capabilities of the terminal device and the received channel state information; means for transmitting information on the channel predictor function to the terminal device; means forcalculating a predicted state of the channel utilising the channel predictor function known by the terminal device; means for transmitting payload data to the terminal device, the data transmission comprising reference information; and means for receiving update information to the predicted state of the channel from the terminal device, where the update information is the variation between the channel predicted at the terminal device and the measured channel

In an embodiment, an apparatus in a communication system comprises means for transmitting to a network element the capabilities of the apparatus; means for receiving from the network element a channel predictor to be used, the predictor being at least partly based on the capabilities of the terminal device; means for receiving from the network element the length of a given time period for collecting channel state information, the time period being based on at least partly on the determined channel predictor; means for receiving reference data from the network node; means for measuring the state of the channel between the apparatus and the network node based on the reference data; means for transmitting, for a given time period, channel state information to the network node; means for receiving from the network node information on channel predictor function; means for receiving from the network node payload data, the data transmission comprising reference information; means for calculating a predicted state of the channel utilising the channel predictor function known by the network node; means for determining variation between the predicted state of channel and the measured state of channel; and means for transmitting information on the variation to the network node as update information.

It will be obvious to a person skilled in the art that, as the technology advances, the inventive concept can be implemented in various ways. The invention and its embodiments are not limited to the examples described above but may vary within the scope of the claims.

## Claims

1. An apparatus in a communication system, comprising:
   a processor; and a memory including instructions, the instructions, when executed by the processor, cause the apparatus to:

   receive from the terminal device capabilities of the terminal device;
   determine a channel predictor to be used at least partly based on the capabilities of the terminal device;
   determine and transmit to the terminal device length of a given time period for collecting channel state information, based on at least partly on the determined channel predictor;
   transmit reference information to the terminal device for the duration of the given time period;
   receive, as a response to the reference information transmission, channel state information from the terminal device;
   determine, by training the channel predictor, a channel predictor function to be used in the communication between the apparatus and the terminal device at least partly based on the capabilities of the terminal device and the received channel state information;
   transmit information on the channel predictor function to the terminal device;
   calculate a predicted state of the channel utilising the channel predictor function known by the terminal device;
   transmit payload data to the terminal device, the data transmission comprising reference information;
   receive update information to the predicted state of the channel from the terminal device, where the update information is the variation between the channel predicted at the terminal device and the measured channel.

2. The apparatus of claim 1, the memory and the computer program code configured to, with the processor, cause the apparatus further to:
   calculate the predicted state of channel utilising a Kalman filter.

3. The apparatus of claim 1, the memory and the computer program code configured to, with the processor, cause the apparatus further to:
   calculate the predicted state of channel utilising a recurrent neural network.

4. The apparatus of claim 3, the memory and the computer program code configured to, with the processor, cause the apparatus further to:
   update the predicted state of the channel when a threshold is surpassed.

5. The apparatus of any preceding claim, the memory and the computer program code configured to, with the processor, cause the apparatus further to:
determine the predicted state of channel is correct if no updates are received from the terminal device.

6. The apparatus of any preceding claim, the memory and the computer program code configured to, with the processor, cause the apparatus further to:
represent the channel predictor function as a matrix and transmit the matrix or an index of a set of matrices of a codebook to the terminal device.

7. An apparatus in a communication system, comprising:
a processor; and a memory including instructions, the instructions, when executed by the processor, cause the apparatus to:

transmit to a network element the capabilities of the apparatus;
receive from the network element a channel predictor to be used, the predictor being at least partly based on the capabilities of the terminal device;
receive from the network element the length of a given time period for collecting channel state information, the time period being based on at least partly on the determined channel predictor;
receive reference data from the network node;
measure the state of the channel between the apparatus and the network node based on the reference data;
transmit, for a given time period, channel state information to the network node;
receive from the network node information on channel predictor function;
receive from the network node payload data, the data transmission comprising reference information;
calculate a predicted state of the channel utilising the channel predictor function known by the network node;
determine variation between the predicted state of channel and the measured state of channel;
transmit information on the variation to the network node as update information.

8. The apparatus of claim 7, the memory and the computer program code configured to, with the processor, cause the apparatus further to:
if the variation between the predicted state of channel and the measured state of channel is smaller than a given threshold, cease transmitting information on the difference to the network node.

9. The apparatus of claim 7, the memory and the computer program code configured to, with the processor, cause the apparatus further to:
initiate the reinitialization of the predictor function, if the variation between the predicted state of channel and the measured state of channel is larger than a given threshold, for a given amount of instances.

10. A method in an apparatus in a communication system comprising the steps of:

receiving from the terminal device capabilities of the terminal device;
determine a channel predictor to be used at least partly based on the capabilities of the terminal device;
determining and transmitting to the terminal device length of a given time period for collecting channel state information, based on at least partly on the determined channel predictor;
transmitting reference information to the terminal device for the duration of the given time period;
receiving, as a response to the reference information transmission, channel state information from the terminal device;
determining, by training the channel predictor, a channel predictor function to be used in the communication between the apparatus and the terminal device at least partly based on the capabilities of the terminal device and the received channel state information;
transmitting information on the channel predictor function to the terminal device;
calculating a predicted state of the channel utilising the channel predictor function known by the terminal device;
transmitting payload data to the terminal device, the data transmission comprising reference information;
receiving update information to the predicted state of the channel from the terminal device, where the update information is the variation between the channel predicted at the terminal device and the measured channel.

11. The method of claim 10, further comprising:
representing the channel predictor function as a matrix and transmit the matrix or an index of a set of matrices of a codebook to the terminal device.

**12.** The method of claim 10, further comprising:
update the predicted state of the channel when a threshold is surpassed.

**13.** A method in an apparatus in a communication system, comprising:

transmitting to a network element the capabilities of the apparatus;
receiving from the network element a channel predictor to be used, the predictor being at least partly based on the capabilities of the terminal device;
receiving from the network element the length of a given time period for collecting channel state information, the time period being based on at least partly on the determined channel predictor;
receiving reference data from the network node;
measuring the state of the channel between the apparatus and the network node based on the reference data;
transmitting, for a given time period, channel state information to the network node;
receiving from the network node information on channel predictor function;
receiving from the network node payload data, the data transmission comprising reference information;
calculating a predicted state of the channel utilising the channel predictor function known by the network node;
determining variation between the predicted state of channel and the measured state of channel;
transmitting information on the variation to the network node as update information.

**14.** The method of claim 13, further comprising:
ceasing transmitting information on the difference to the network node, if the variation between the predicted state of channel and the measured state of channel is smaller than a given threshold.

**15.** A computer program comprising instructions, which, when executed by an apparatus, cause the apparatus to perform the method of any of claims 10 to 14 .

FIG. 1

FIG. 2

FIG. 3

FIG. 4

FIG. 5

RECEIVE TERMINAL INFORMATION — 600

DETERMINE CHANNEL PREDICTOR — 602

DETERMINE TIME PERIOD — 604

TRANSMIT RS — 606

RECEIVE CSI — 608

DETERMINE PREDICTOR FUNCTION — 610

TRANSMIT PREDICTOR FUNCTION — 612

CALCULATE PREDICTED STATE — 614

TRANSMIT PAYLOAD DATA — 616

RECEIVE UPDATE INFORMATION — 618

FIG. 6

TRANSMIT INFORMATION — 700

RECEIVE CHANNEL PREDICTOR — 702

RECEIVE TIME PERIOD — 704

RECEIVE RS — 706

MEASURE CHANNEL — 708

TRANSMIT CSI — 710

RECEIVE PREDICTOR FUNCTION — 712

RECEIVE PAYLOAD DATA — 714

CALCULATE PREDICTED STATE — 716

DETERMINE VARIATION — 718

TRANSMIT UPDATE INFORMATION — 720

FIG. 7

FIG. 8

COMMUNICATE INFORMATION — 900

RECEIVE CHANNEL PREDICTOR — 902

RECEIVE TIME PERIOD — 904

TRANSMIT RS — 906

RECEIVE PREDICTOR FUNCTION — 908

TRANSMIT PAYLOAD DATA — 910

CALCULATE PREDICTED STATE — 912

RECEIVE UPDATE INFORMATION — 914

FIG. 9

FIG. 10A

FIG. 10B

FIG. 10C

FIG. 10D

FIG. 11A

FIG. 11B

Europäisches
Patentamt

European
Patent Office

Office européen
des brevets

# EUROPEAN SEARCH REPORT

Application Number

EP 23 20 4295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/123807 A1 (ROSE LUCA [FR] ET AL) 21 April 2022 (2022-04-21) <br> * paragraph [0040] – paragraph [0055] * <br> * paragraph [0063] – paragraph [0067] * <br> * paragraph [0071] – paragraph [0079] * <br> * paragraph [0084] – paragraph [0095] * <br> * paragraph [0114] – paragraph [0121] * <br> * paragraph [0131] * <br> * claims 6,7 * | 1-15 | INV. <br> H04B17/373 |
| A | EP 3 738 281 A1 (NOKIA TECHNOLOGIES OY [FI]) 18 November 2020 (2020-11-18) <br> * paragraph [0035] – paragraph [0046] * | 1-15 | |
| A | US 2021/390434 A1 (BAI TIANYANG [US] ET AL) 16 December 2021 (2021-12-16) <br> * paragraph [0055] – paragraph [0076] * | 1-15 | |

TECHNICAL FIELDS
SEARCHED     (IPC)

H04B

The present search report has been drawn up for all claims

| Place of search | Date of completion of the search | Examiner |
|---|---|---|
| The Hague | 6 March 2024 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 4295

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2024

| Patent document cited in search report | | Publication date | Patent family member(s) | | Publication date |
|---|---|---|---|---|---|
| US 2022123807 | A1 | 21-04-2022 | CN | 114389779 A | 22-04-2022 |
| | | | EP | 3989459 A1 | 27-04-2022 |
| | | | US | 2022123807 A1 | 21-04-2022 |
| EP 3738281 | A1 | 18-11-2020 | EP | 3738281 A1 | 18-11-2020 |
| | | | WO | 2019138156 A1 | 18-07-2019 |
| US 2021390434 | A1 | 16-12-2021 | NONE | | |

EPO FORM P0459

For more details about this annex : see Official Journal of the European Patent Office, No. 12/82